Europäisches Patentamt

European Patent Office

Office européen des brevets

(19)

(11) Numéro de publication: **0 056 754**

A2

(12) **DEMANDE DE BREVET EUROPEEN**

(21) Numéro de dépôt: **82400046.7**

(22) Date de dépôt: **12.01.82**

(51) Int. Cl.³: **B 23 D 79/08**
**B 44 D 3/16**

(30) Priorité: **16.01.81 FR 8101103**

(43) Date de publication de la demande:
**28.07.82 Bulletin 82/30**

(84) Etats contractants désignés:
**AT BE CH DE FR GB IT LI LU NL SE**

(71) Demandeur: **Zaragoza, Antoine**
**69, Rue Lucien Cassagne**
**F-31500 Toulouse(FR)**

(71) Demandeur: **Zaragoza, Raymond**
**69, Rue Lucien Cassagne**
**F-31500 Toulouse(FR)**

(72) Inventeur: **Zaragoza, Antoine**
**69, Rue Lucien Cassagne**
**F-31500 Toulouse(FR)**

(72) Inventeur: **Zaragoza, Raymond**
**69, Rue Lucien Cassagne**
**F-31500 Toulouse(FR)**

(74) Mandataire: **Morelle, Guy Georges Alain**
**Cabinet SCOPI 1, Avenue de Rangueil**
**F-31400 Toulouse(FR)**

(54) **Racloir pour dégrossir les surfaces enduites d'un apprêt.**

(57) L'invention concerne un racloir installé dans un bâti 2 comportant une semelle $2_c$ adoptant la forme de la surface à dégrossir et munie d'une ouverture 3.

La lame d'acier tranchante 1 formant racloir débouche sur la semelle $2_c$ par cette ouverture 3 de manière à dépasser du plan de la semelle. Cette lame 1 est placée dans un plan vertical au plan de la semelle et transversalement à l'axe des déplacements (flèche à double sens D) du bâti 2. Deux lumières latérales $4_a$ et $4_b$ pratiquées dans les parois latérales $2_a$ et $2_b$ du bâti 2 au-dessus de l'ouverture 3 assurent l'évacuation des matières raclées par les passages répétés (flèche D) de la lame 1 sur la surface à dégrossir.

Application au dégrossissage de surfaces enduites d'un apprêt (mastic polyester) telles celles que l'on trouve dans la carrosserie, le bâtiment, etc...

EP 0 056 754 A2

**0056754**

RACLOIR POUR DEGROSSIR LES SURFACES ENDUITES D'UN APPRET

L'invention concerne les outils permettant de dégrossir les surfaces enduites d'un apprêt et plus particulièrement les revêtements, le plus souvent de tôle, qui habillent les châssis de véhicules.

La méthode de travail généralement employée par les carrossiers pour parachever le débosselage d'une tôle cabossée consiste à mastiquer l'entière surface de cette dernière puis à la poncer avant de passer la couche de peinture ou d'émail définitive. Le ponçage du mastic (se présentant souvent sous la forme d'un polyester), destiné à augmenter l'adhérence de la couche externe tout en donnant à celle-ci l'aspect uni et brillant du poli recherché, s'opère actuellement par abrasion. Cette opération, réalisée par frottement au moyen d'un papier abrasif dont le calibre des grains sera adapté progressivement pour parfaire le poli, est très longue et souvent fastidieuse. D'autre part, la matière usée se dégage sous forme de projections contenant des agents nocifs nécessitant, notamment dans des atmosphères confinées, un recyclage d'air impérieux.

Ces constatations ont amené les demandeurs à mettre au point un outil de conception nouvelle permettant d'obtenir un état de surface identique ou supérieur à celui résultant de l'opération de ponçage, tout en évitant la dispersion dans l'air environnant des matières enlevées. Selon l'invention, cet appareil est un racloir installé dans un bâti comportant une semelle adoptant la forme de la surface à dégrossir et munie d'une ouverture dans laquelle la lame d'acier tranchante formant racloir est placée verticalement au plan de la semelle, de manière à dépasser de cette dernière, et transversalement à son axe de déplacement sur la surface à travailler. Ainsi, sous l'effet des passages répétés du racloir sur la surface à dégrossir, les matières sont enlevées sous forme de lamelles qui, selon une caractéristique particulièrement avantageuse de l'invention, sont évacuées latéralement au moyen de deux lumières en arc de cercle surmontant l'ouverture de la semelle et ménagées dans les parois latérales du bâti du racloir. Le problème de dispersion dans l'air environnant des matières enlevées est donc résolu, car les déchets, obtenus par raclage et se présentant sous la forme de lamelles,

2

0056754

sont beaucoup moins volatils, de par leur poids, que ceux obtenus par abrasion et se présentant sous forme de particules finement divisées.

Selon une caractéristique particulièrement avantageuse de l'invention, la hauteur de dépassement de la susdite lame par rapport au plan de la semelle est réglable, permettant ainsi de modifier l'épaisseur d'enlèvement de la matière raclée.

Selon une autre caractéristique particulièrement avantageuse de l'invention, la lame d'acier tranchante est montée pivotante autour d'un axe parallèle à l'axe longitudinal du bâti du racloir. Cette disposition permet de corriger l'horizontalité de la lame par rapport au plan de la semelle.

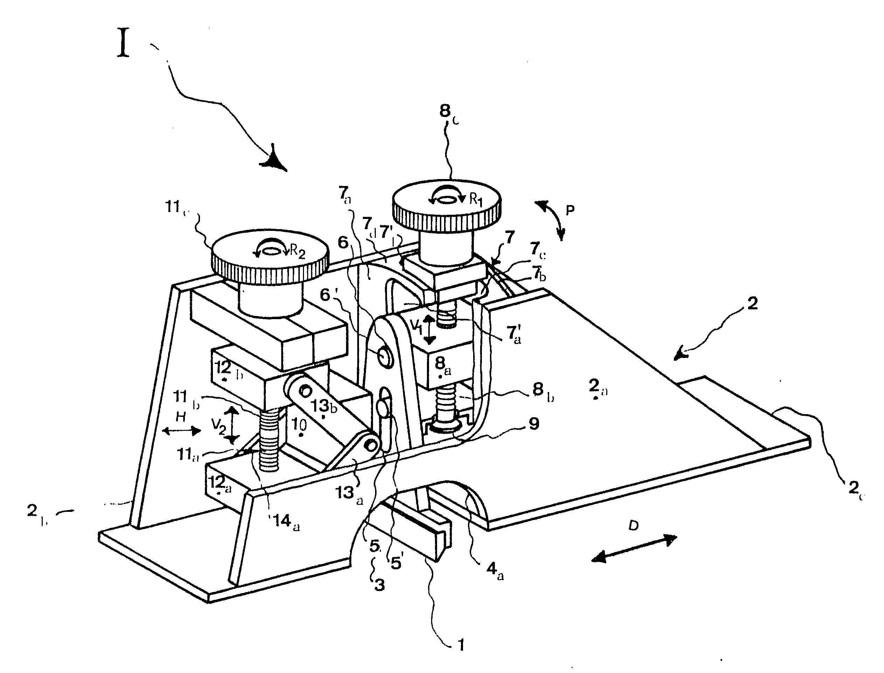

Bien que les aspects de l'invention considérés comme nouveaux aient été exprimés ci-dessus, de plus amples détails concernant des méthodes préférées et d'autres caractéristiques de celle-ci seront mieux compris en se référant à la description détaillée ci-dessous et au dessin l'accompagnant.

La figure portée par ce dessin représente, par une vue de dessus partiellement écorchée, un racloir conforme à la présente invention.

Ce racloir, référencé I dans son ensemble, est constitué d'une lame d'acier tranchante 1, biseautée à son extrémité inférieure et installée dans un bâti 2 comportant d'une part deux flasques parallèles $2_a$, $2_b$, définissant un organe de préhension manuelle et un mécanisme de support pour tous les composants du racloir I, et d'autre part une semelle $2_c$, adoptant la forme de la surface à dégrossir. La lame 1 débouche sur la semelle $2_c$ au moyen d'une ouverture 3, et est placée transversalement à l'axe des déplacements (flèche à double sens D) du bâti 2, de manière à dépasser de ladite semelle. Conformément à l'invention, la lame 1 est disposée dans un plan perpendiculaire à celui de la semelle pour que le raclage s'opère perpendiculairement à la surface à dégrossir. Il est utile dès à présent de souligner l'originalité du racloir de l'invention par rapport à l'outil du menuisier destiné à aplanir le bois et connu sous le nom de rabot. En effet, dans ce dernier, la lame d'acier tranchante se présente dans un plan oblique à la surface à aplanir car la matière à enlever est, dans ce cas, du bois. D'autre part, la matière ainsi enlevée et se présentant sous la forme de copeaux est évacuée par l'ouverture de la semelle, alors que celle enlevée par le racloir I et se présentant sous la forme de fines lamelles est évacuée latéralement au moyen de deux lumières $4_a$, $4_b$ (cette dernière n'étant pas représentée sur le dessin) surmontant l'ouverture 3 et ménagées dans les deux parois $2_a$ et $2_b$ du bâti 2. Cette disposition de l'invention évite ainsi l'apparition de bouchons de matières enlevées à l'intérieur du bâti de l'outil.

On remarquera que la partie supérieure de la lame 1 est munie de deux orifices superposés 5 et 6, dans lesquels sont logés deux tétons, respectivement 5' et 6'. Le premier 5', qui est fixé à une entretoise 7 séparant les deux parois $2_a$ et $2_b$ du bâti et constitué de deux flasques $7_a$ et $7_b$ délimitant entre eux un espace creux $7_c$, joue le rôle de pièce de guidage à l'intérieur de l'orifice 5 de forme allongée, lors des déplacements verticaux (flèche à double sens $V_1$) de la lame 1, déplacements qui déterminent la hauteur de dépassement de cette dernière par rapport à la semelle $2_c$. L'amplitude de ces déplacements est contrôlée par le deuxième téton 6' associé à un écrou $8_a$ monté à l'intérieur de l'espace $7_c$ sur une tige filetée $8_b$, laquelle est munie à son extrémité supérieure d'une tête moletée $8_c$ pour actionner manuellement la rotation de la tige $8_b$ (flèche à double sens $R_1$). Ainsi, sous l'effet de la rotation de cette dernière dans un des deux sens de la flèche $R_1$, le filetage de la tige $8_b$ entraîne la montée ou la descente (flèche $V_1$) de l'écrou $8_a$ et du téton 6' y associé, de sorte que l'orifice 6 de la lame 1 engagé autour de ce téton suit le même mouvement.

Selon une caractéristique particulièrement avantageuse de l'invention, la lame 1 est également montée pivotante (flèche à double sens P) autour du téton 5', permettant ainsi de régler l'inclinaison de son arête tranchante. Ce mouvement est assuré par la combinaison des trois caractéristiques suivantes. La première est de monter l'extrémité inférieure de la tige filetée $8_b$ sur une articulation à rotule 9 ; la deuxième est de ménager dans la pièce supérieure $7_d$ joignant les deux flasques $7_a$ et $7_b$ une ouverture $7'_d$ autorisant en cet endroit les déplacements P de la tige $8_b$ ; la troisième est de munir le flasque $7_a$ d'une lumière triangulaire $7'_a$ pour que le téton 6' puisse évoluer librement verticalement (flèche $V_1$) et/ou en rotation autour de l'autre téton 5' (flèche P).

L'invention propose également un moyen de blocage de la lame 1 dans une position définie par celle du téton 6' par rapport au téton 5' au moyen de la tête moletée $8_c$. Ce moyen consiste à comprimer la partie supérieure de la lame 1 entre le flasque $7_a$ et une plaque 10 susceptible de se rapprocher ou de s'éloigner (flèche à double sens H) dudit flasque sous l'effet d'une commande mécanique. Cette dernière comprend une tige cylindrique 11 pourvue sur sa longueur de deux filetages $11_a$ et $11_b$, à sens inversés et sur lesquels sont montés deux écrous rectangulaires $12_a$ et $12_b$ reliés latéralement à la plaque 10 au moyen de deux paires de bras articulés $13_a$, $13_b$, $14_a$, $14_b$ (ce dernier n'etant pas visible sur le dessin). Ainsi, sous l'effet de la rotation de la tige 11, dans un des deux sens de la flèche $R_2$, rotation commandée manuellement au moyen d'une tête moletée $11_c$ fixée à son extrémité supérieure, les deux écrous $12_a$ et $12_b$ s'éloignent ou se rapprochent l'un de l'autre (flèche à double sens $V_2$), provoquant ainsi par l'intermédiaire des bras $13_a$,

4

0056754

$13_b$, $14_a$, $14_b$, le déplacement horizontal (flèche à double sens H) de la plaque 10, de manière à serrer ou à desserrer la lame 1 entre ce dernier et le flasque $7_a$.

Le racloir I qui vient d'être ci-dessus décrit et représenté est particulièrement destiné à un usage mécanique dans lequel la force d'entraînement provoquant les déplacements (flèche à double sens D) de la lame 1 est manuelle et appliquée par l'utilisateur sur le bâti 2. Il va de soi que la liberté d'agencement n'est pas restreinte à ce mode de réalisation et qu'il est possible, à partir de ce dernier, d'imaginer un outil dans lequel la force d'entraînement de la lame 1 pourra être motorisée par un moyen électrique ou analogue.

L'invention qui vient d'être décrite possède un vaste domaine d'applications industrielles. Notamment, comme il est dit au début de la présente description, elle permet de dégrossir les surfaces enduites d'un apprêt telles celles que l'on trouve dans la carrosserie, le bâtiment, etc...

REVENDICATIONS

1. Racloir destiné plus particulièrement au dégrossissage de surfaces enduites d'un apprêt et installé dans un bâti comportant au moins deux parois latérales et une semelle adoptant la forme de la surface à dégrossir et munie d'une ouverture dans laquelle la lame d'acier tranchante formant racloir est placée de manière à dépasser de la semelle transversalement à l'axe de déplacement de cette dernière sur la surface à dégrossir, CARACTERISE PAR LE FAIT QUE la susdite lame est disposée dans un plan perpendiculaire au plan de ladite semelle.

2. Racloir selon la revendication 1, CARACTERISE PAR LE FAIT QUE la hauteur de dépassement de la susdite lame par rapport au plan de la semelle est réglable.

3. Racloir selon la revendication 1, CARACTERISE PAR LE FAIT QUE la susdite lame d'acier tranchante est montée pivotante autour d'un axe parallèle à l'axe longitudinal du bâti.

4. Racloir selon la revendication 1, CARACTERISE PAR LE FAIT QUE les parois latérales du bâti sont pourvues chacune d'une lumière en arc de cercle surmontant l'ouverture de ladite semelle.

5. Racloir selon les revendications 1 et 2, CARACTERISE PAR LE FAIT QUE la partie supérieure de la lame d'acier tranchante est munie de deux orifices superposés où, dans le premier, de forme allongée, vient se loger un téton solidaire du bâti parallèlement à l'axe longitudinal de ce dernier, et, dans le second, de forme circulaire, vient se loger un deuxième téton parallèle au premier et mobile le long d'un axe perpendiculaire au plan de la semelle pour régler la hauteur de dépassement de la lame par rapport audit plan.

6. Racloir selon les revendications 1, 2, 3 et 5 prises ensemble, CARACTERISE PAR LE FAIT QUE le deuxième téton s'engageant dans l'orifice circulaire est monté pivotant autour du premier téton, selon une expansion angulaire perpendiculaire au plan longitudinal du bâti.

7. Racloir selon les revendications 5 et 6, CARACTERISE PAR LE FAIT QUE le deuxième téton s'engageant dans l'orifice circulaire est solidaire d'un écrou vissé sur une tige filetée verticale, montée d'une part rotative sur elle-même au moyen d'une tête moletée à commande manuelle à son extrémité haute, et d'autre part pivotante sur sa base d'appui au moyen d'une articulation à rotule.

8. Racloir selon les revendications 1 et 7, CARACTERISE PAR LE FAIT QUE les deux parois latérales du bâti sont séparées par une entretoise formée de deux flasques délimitant entre eux un espace creux dans lequel sont logés la tige filetée verticale et son écrou, et dont l'un des deux, sur lequel est fixé le premier téton, comporte une ouverture triangulaire autorisant les

2

évolutions du deuxième téton.

9. Racloir selon les revendications 5 à 8 prises ensemble, CARACTERISE PAR LE FAIT QU'il comprend une plaque disposée dans un plan parallèle au plan du flasque sur lequel est fixé le premier téton, et susceptible, sous l'effet d'une commande mécanique, de se rapprocher ou de s'éloigner dudit flasque pour comprimer la partie supérieure de la lame d'acier tranchante placée entre eux et bloquer cette dernière dans une position désirée.

10. Racloir selon la revendication 9, CARACTERISE PAR LE FAIT QUE la commande mécanique des déplacements de la susdite plaque est constituée par une tige cylindrique perpendiculaire montée rotative sur elle-même au moyen d'une tête moletée à commande manuelle, fixée à son extrémité haute, ladite tige étant pourvue de deux filetages inférieur et supérieur à sens inversés, sur chacun desquels est fixé un écrou rectangulaire relié à ladite plaque par une paire de bras latéraux.

I

$8_c$

$R_1$

$7_a$

$11_c$

$7_d$ $7'$

$6$

$7$

$7_c$

$P$

$R_2$

$6'$

$7_b$

$V_1$

$7'_a$

$12_b$

$8_a$

$11_b$

$8_b$

$2_a$

$H$

$13_b$

$V_2$

$10$

$9$

$11_a$

$12_a$

$13_a$

$14_a$

$2_b$

$5$ $5'$

$4_a$

$2_c$

$3$

$D$

$1$

1/1

2

0056754